(19)

Europäisches
Patentamt
European
Patent Office
Office européen
des brevets

(11) **EP 3 866 483 A1**

(12) **EUROPEAN PATENT APPLICATION**
published in accordance with Art. 153(4) EPC

(43) Date of publication:
**18.08.2021 Bulletin 2021/33**

(51) Int Cl.:
***H04N 21/647*** (2011.01)

(21) Application number: **19887348.1**

(22) Date of filing: **13.11.2019**

(86) International application number:
**PCT/CN2019/117975**

(87) International publication number:
**WO 2020/103737 (28.05.2020 Gazette 2020/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.11.2018 CN 201811400631**

(71) Applicant: **Huawei Technologies Co., Ltd.
Shenzhen, Guangdong 518129 (CN)**

(72) Inventors:
• **XIAO, Xin**
**Shenzhen, Guangdong 518129 (CN)**
• **XUE, Li**
**Shenzhen, Guangdong 518129 (CN)**
• **LIN, Wei**
**Shenzhen, Guangdong 518129 (CN)**
• **WANG, Jian**
**Shenzhen, Guangdong 518129 (CN)**
• **GUAN, Yaodong**
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **NETWORK PERFORMANCE BOTTLENECK VALUE DETERMINATION METHOD AND APPARATUS**

(57) Embodiments of this application disclose a method for determining a network performance bottleneck value, to intelligently identify a network performance bottleneck value that affects user experience quality, so as to improve accuracy of the network performance bottleneck value according to user experience. The method in this application includes: obtaining an indicator value of a user experience quality reference indicator and an indicator value of a network performance indicator that are corresponding to a target network device at a different moment in a same time period, where a user experience quality indicator is used to represent user experience quality, and the network performance indicator is used to represent network quality; and determining a network performance bottleneck value based on the obtained indicator value of the user experience quality reference indicator and the obtained indicator value of the network performance indicator in the same time period, where the network performance bottleneck value is used to be compared with an indicator value of a network performance indicator of a network device to determine network quality of the network device.

A network optimization analysis apparatus determines a target network device based on a network topology — 201

The network optimization analysis apparatus obtains an indicator value of a user experience quality reference indicator and an indicator value of a network performance indicator that are corresponding to a target network device at a different moment in a same time period — 202

The network optimization analysis apparatus determines a network performance bottleneck value based on the obtained indicator value of the user quality of experience reference indicator and the obtained indicator value of the network performance indicator — 203

When it is detected that network quality represented by the indicator value of the network performance indicator is lower than network quality represented by the network performance bottleneck value, the network optimization analysis apparatus performs network optimization to improve network quality — 204

FIG. 2

EP 3 866 483 A1

**Description**

**TECHNICAL FIELD**

This application relates to the field of network information technologies, and in particular, to a method for determining a network performance bottleneck value and an apparatus.

**BACKGROUND**

With the development of network services, higher requirements are imposed on network quality, for example, a high-speed download speed, smoothness of video playing, and a quantity of video quality switching times. Network quality improvement is closely related to a network performance indicator.

The network performance indicator is an important parameter for measuring network quality. A proper design of the network performance indicator can effectively improve network quality and meet a high network quality requirement of a user. However, due to limited network resources, a bottleneck value of the network performance indicator may occur, so that network quality is no longer significantly improved as the network performance indicator changes.

A network performance bottleneck value is usually determined according to experience. In different application scenarios, the network performance bottleneck value determined according to experience is not accurate enough, and a misjudgment on network quality may be caused by using the network performance bottleneck value.

**SUMMARY**

Embodiments of this application provide a method for determining a network performance bottleneck value, to intelligently identify a network performance bottleneck value that affects user experience quality, so as to improve accuracy of the network performance bottleneck value according to user experience.

To achieve the foregoing technical objective, the embodiments of this application provide the following technical solutions:

According to a first aspect, an embodiment of this application provides a method for determining a network performance bottleneck value. An indicator value of a user experience quality reference indicator and an indicator value of a network performance indicator that are corresponding to a target network device are obtained at a different moment in a same time period, where a user experience quality indicator is used to represent user experience quality, and the network performance indicator is used to represent network quality. Network quality may also be referred to as network performance. The user experience quality reference indicator may be understood as user quality reference data, and specifically, the user experience quality reference indicator may be a time series. Similarly, the network performance indicator may also be understood as network performance data, and specifically, the network performance data may also be a time series. A network performance bottleneck value is determined based on the obtained indicator value of the user experience quality reference indicator and the obtained indicator value of the network performance indicator in the same time period, where the network performance bottleneck value is used to be compared with an indicator value of a network performance indicator of a network device to determine network quality of the network device.

It can be learned from the foregoing technical solutions that the embodiments of this application have the following advantages: The network performance bottleneck value is obtained based on the indicator value of the user experience quality reference indicator corresponding to the target network device at the different moment in the same time period and the indicator value of the network performance indicator corresponding to the target network device at the different moment in the same time period. In the foregoing method for determining the network performance bottleneck value, the user experience quality reference indicator is further referenced when the network performance indicator is considered. The user experience quality reference indicator represents user experience quality, and the network performance indicator represents network quality. In other words, in the foregoing method for determining the network performance bottleneck value, a relationship between user experience quality and network quality is considered. Therefore, determining the network performance bottleneck value by using the foregoing method can improve accuracy of the network performance bottleneck value.

Optionally, with reference to the first aspect, in a first possible implementation of the first aspect of the embodiments of this application, that a network performance bottleneck value is determined based on the obtained indicator value of the user quality of experience reference indicator and the obtained indicator value of the network performance indicator may specifically include: analyzing the indicator value of the user quality of experience reference indicator and the indicator value of the network performance indicator that are obtained by the target network device in the different moment in the same time period, to obtain an indicator value of a performance evaluation indicator, where the performance evaluation indicator is used to evaluate an association relationship between user experience quality and network quality; and determining the network performance bottleneck value based on the indicator value of the performance evaluation indicator obtained through analysis.

It can be learned from the first possible implementation of the first aspect that, the foregoing analysis method in which a large amount of indicator data is used is a big data analysis method, where big data analysis has a feature of high accuracy. Therefore, obtaining the network performance bottleneck value by using the big data analysis method can improve accuracy of the bottleneck value.

Optionally, with reference to the first aspect or the first possible implementation of the first aspect, in a second possible implementation of the first aspect of the embodiments of this application, the target network device may specifically be a network device whose user experience quality represented by a statistical value corresponding to a user experience quality reference indicator is lower than user experience quality represented by a first threshold. The statistical value corresponding to the user experience quality reference indicator may specifically be an average value, a median value, or the like of user experience quality reference indicators in a specific time period. The first threshold may be a preset indicator value used to measure user experience quality. When the statistical value corresponding to the user experience quality reference indicator is lower than the first threshold, it represents that user experience quality is poor. Otherwise, user experience quality is good. Further, the target network device may be manually specified, or may be automatically selected by using the statistical value (for example, an average value) corresponding to the user experience quality reference indicator.

It can be learned from the second implementation of the first aspect that, data accuracy corresponding to the user experience quality reference indicator and the network performance indicator that are obtained by the target network device is higher. This can improve data accuracy of the user experience quality reference indicator and the network performance indicator, and further improve accuracy of the network performance bottleneck value finally obtained through analysis.

Optionally, with reference to the first possible implementation of the first aspect, in a third possible implementation of the first aspect of the embodiments of this application, the performance evaluation indicator may specifically be a first evaluation indicator, where the first evaluation indicator is used to evaluate impact of network quality on user experience quality. In this case, the determining the network performance bottleneck value based on the indicator value of the performance evaluation indicator may specifically be: determining, as the network performance bottleneck value, an indicator value of a corresponding network performance indicator when an indicator value of the first evaluation indicator is greater than a second threshold, where the second threshold is preset.

Optionally, with reference to the third possible implementation of the first aspect, in a fourth possible implementation of the first aspect of the embodiments of this application, in addition to including the first evaluation indicator, the performance evaluation indicator may further include a second evaluation indicator, where the second performance evaluation indicator is used to evaluate a percentage of a quantity of moments at which user experience quality is consistent with network quality to a quantity of moments in the same time period. In this case, the determining the network performance bottleneck value based on the performance evaluation indicator may specifically be: using, as a candidate network performance bottleneck value, an indicator value of a network performance indicator when an indicator value of the first evaluation indicator is greater than a second threshold; and determining a final network performance bottleneck value from the candidate network performance bottleneck value by using a filtering condition that an indicator value of the second evaluation indicator is greater than a third threshold, where both the second threshold and the third threshold may be preset.

In the third and the fourth possible implementations of the first aspect, when both the first evaluation indicator and the second evaluation indicator are considered, accuracy of the obtained network performance bottleneck value is higher. When only the first evaluation indicator is considered, a manner of obtaining the network performance bottleneck value is simpler. Therefore, the second and the third possible implementations may be selected according to different application scenarios.

Optionally, with reference to the second possible implementation of the first aspect, in a fifth possible implementation of the first aspect of the embodiments of this application, before the obtaining an indicator value of a user experience quality reference indicator and an indicator value of a network performance indicator that are corresponding to a target network device at a different moment in a same time period, the method further includes: aggregating, based on a network topology, a user experience indicator according to a network device; further calculating, based on the aggregated user experience indicator, a statistical value corresponding to a user experience quality reference indicator of each network device; and finally determining, as the target network device, a network device whose statistical value corresponding to the user experience quality reference indicator of each network device is lower than the first threshold.

Beneficial effects of the fifth possible implementation of the first aspect are similar to beneficial effects of the second possible implementation of the first aspect. Details are not described herein again.

Optionally, with reference to the first aspect or the first to the fourth possible implementations of the first aspect, in a sixth possible implementation of the first aspect of the embodiments of this application, the user experience quality reference indicator in the embodiments of this application includes at least one of a poor-QoE rate indicator or a user experience indicator; and the network performance indicator in the embodiments of this application includes at least one of a network bandwidth usage, a packet loss rate, or a delay. The poor-QoE rate indicator is specifically used to indicate overall user experience quality of all users connected to the network device.

Optionally, with reference to the sixth possible implementation of the first aspect, in a seventh possible implementation of the first aspect of the embodiments of this application, the user experience indicator in the embodiments of this application includes: a video average opinion score, a frame freezing duration, a frame freezing rate, a frame freezing frequency, an artifact duration percentage, a quantity of artifact times, an artifact area percentage, a quantity of video quality switching times, or a poor video quality percentage.

According to a second aspect, an embodiment of this application provides a network performance analysis apparatus. The network optimization analysis apparatus has a function of implementing the method in any one of the first aspect or the possible implementations of the first aspect. The function may be implemented by hardware, or by hardware executing corresponding software. The hardware or the software includes one or more modules corresponding to the function.

According to a third aspect, an embodiment of this application provides a network optimization analysis apparatus. The network optimization analysis apparatus includes a processor and a memory. The memory is configured to store a computer-executable instruction. When the network optimization analysis apparatus runs, the processor executes the computer-executable instruction stored in the memory, so that the network optimization analysis apparatus performs the method for determining the network performance bottleneck value according to any one of the first aspect or the possible implementations of the first aspect.

According to a fourth aspect, an embodiment of this application provides a computer-readable storage medium. The computer-readable storage medium stores a computer operation instruction. When the computer operation instruction is run on a computer, the computer can perform the method for determining the network performance bottleneck value according to any one of the first aspect or the possible implementations of the first aspect.

According to a fifth aspect, an embodiment of this application provides a computer program product. The computer program product includes a computer operation instruction. When the computer operation instruction is run on a computer, the computer can perform the method for determining the network performance bottleneck value according to any one of the first aspect or the possible implementations of the first aspect.

For technical effects brought by any implementation in the second aspect to the fifth aspect, refer to technical effects brought by different implementations in the first aspect. Details are not described herein again.

## BRIEF DESCRIPTION OF DRAWINGS

FIG. 1 is a schematic diagram of a system architecture according to an embodiment of this application;
FIG. 2 is a schematic diagram of an embodiment of a method for determining a network performance bottleneck value according to an embodiment of this application;
FIG. 3 is a schematic diagram of a network topology according to an embodiment of this application;
FIG. 4 is a schematic diagram of a connection structure of an optical line terminal according to an embodiment of this application;
FIG. 5 is a schematic diagram of an embodiment of a user experience indicator and a network performance indicator according to an embodiment of this application;
FIG. 6 is a schematic diagram of an embodiment of an F-score indicator according to an embodiment of this application;
FIG. 7 is a schematic diagram of a fitting curve of an F-score indicator curve according to an embodiment of this application;
FIG. 8 is a schematic diagram of an embodiment of an accuracy indicator according to an embodiment of this application;
FIG. 9 is a schematic diagram of a hardware structure of a network optimization apparatus according to an embodiment of this application; and
FIG. 10 is a schematic diagram of an embodiment of a network optimization apparatus according to an embodiment of this application.

## DESCRIPTION OF EMBODIMENTS

The following describes the embodiments of this application with reference to the accompanying drawings. Apparently, the described embodiments are merely some but not all of the embodiments of this application. A person of ordinary skill in the art may learn that as a technology evolves and a new scenario emerges, the technical solutions provided in the embodiments of this application are also applicable to a similar technical problem.

Embodiments of this application provide a network optimization method and apparatus, which are applicable to a network system having a relatively high requirement for network service quality, to implement precise control over network optimization and save network resources. Details are respectively described in the following.

The term "and/or" in this application may describe an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that the embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or modules is not necessarily limited to those modules, but may include other modules not expressly listed or inherent to such a process, method, system, product, or device. The naming or numbering of the steps appearing in this application does not mean that the steps in the method procedures need to be performed in a time/logical order indicated by the naming or numbering. An execution order of the steps in the procedures that have been named or numbered can be changed according to the technical objective to be achieved, as long as same or similar technical effects can be achieved. Division into the modules in this application is logical division, and may be other division in actual implementation. For example, a plurality of modules may be combined or integrated into another system, or some features may be ignored or may not performed. In addition, the displayed or discussed mutual couplings or direct couplings or communication connections may be implemented by using some interfaces. The indirect couplings or communication connections between the modules may be implemented in electronic or other similar forms. This is not limited in this application. In addition, modules or sub-modules described as separate components may be or may not be physically separated, or may be or may not be physical modules, or may not be grouped into multiple circuit modules. Objectives of the solutions of this application may be achieved by selecting some or all of the modules according to actual requirements.

The method for determining a network performance bottleneck value in the embodiments of this application is applicable to a network optimization system. The network optimization system is configured to: perform a network performance analysis operation, and perform network optimization on a network based on a network performance analysis result, to improve network performance.

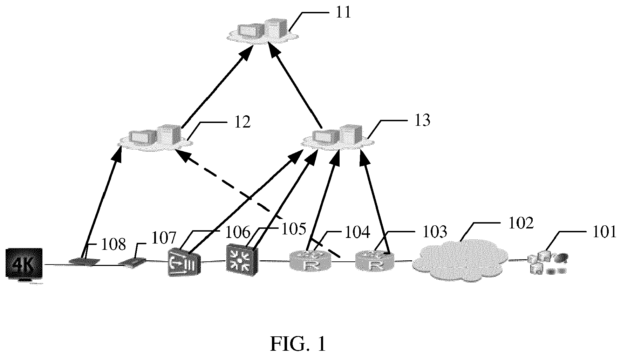

FIG. 1 is a schematic diagram of a system architecture according to an embodiment of this application.

The system architecture shown in FIG. 1 includes a network optimization analysis system 11, a user experience indicator collection system 12, a topology resource management collection system 13, a service server 101, a provincial backbone network 102, a core router (core router, CR) 103, a broadband remote access gateway (broadband remote access server, BRAS) 104, a local area network switch (lan switch, LSW) 105, an optical line terminal (optical line terminal, OLT) 106, an optical network terminal (optical network terminal, ONT) 107, and a service terminal 108.

The service server 101 may specifically be an internet protocol television (internet protocol television, IPTV) server, and the service terminal 108 may specifically be a set top box (set top box, STB).

The topology resource management collection system 13 is separately connected to the CR 103, the BRAS 104, the LSW 105, and the OLT 106, and is configured to collect network topology data and resource management data that includes a connection relationship between a user and a network device. The user experience indicator collection system 12 is connected to the STB 108, and is configured to collect a user experience indicator in a network. In addition, as shown by a dashed arrow in FIG. 1, the user indicator collection system 12 may also be set between the CR 103 and the BRAS 104. Specifically, a probe corresponding to the user indicator collection system 12 is set between the CR 103 and the BRA S 104. Further, the user indicator collection system 12 uses the probe to collect the user experience indicator.

The network optimization analysis system 11 is configured to: obtain an indicator value of a user experience quality reference indicator and an indicator value of a network performance indicator that are corresponding to a target network device at a different moment in a same time period, where the user experience quality reference indicator is used to represent user experience quality, and the network performance indicator is used to represent network quality; and further determine a network performance bottleneck value based on the obtained indicator value of the user experience quality reference indicator and the obtained indicator value of the network performance indicator in the same time period, where the network performance bottleneck value is used to be compared with an indicator value of a network performance indicator of a network device to determine network quality of the network device.

Optionally, in an implementation, the network optimization analysis system 11 may specifically be configured to: analyze the indicator value of the user quality of experience reference indicator and the indicator value of the network performance indicator that are obtained by the target network device in the different moment in the same time period, to obtain an indicator value of a performance evaluation indicator, where the performance evaluation indicator is used to evaluate an association relationship between user experience quality and network quality; and further determine the network performance bottleneck value based on the indicator value of the performance evaluation indicator obtained through analysis.

Optionally, in a possible implementation, the performance evaluation indicator may specifically be a first evaluation indicator, where the first evaluation indicator is used to evaluate impact of network quality on user experience quality. In this case, the network optimization analysis system 11 is specifically configured to determine, as the network performance bottleneck value, an indicator value of a corresponding network performance indicator when an indicator value of the first evaluation indicator is greater than a second threshold.

Optionally, in a possible implementation, in addition to including the first evaluation indicator, the performance evaluation indicator may further include a second evaluation indicator, where the second performance evaluation indicator is used to evaluate a percentage of a quantity of moments at which user experience quality is consistent with network quality to a quantity of moments in the same time period. In this case, the network optimization analysis system 11 is specifically configured to: use, as a candidate network performance bottleneck value, an indicator value of a corresponding network performance indicator when an indicator value of the first evaluation indicator is greater than a second threshold; and determine a final network performance bottleneck value from the candidate network performance bottleneck value by using a filtering condition that an indicator value of the second evaluation indicator is greater than a third threshold.

Optionally, in an implementation, the target network device may specifically be a network device whose statistical value corresponding to the user experience quality reference indicator is lower than a first threshold. The statistical value corresponding to the user experience quality reference indicator may specifically be an average value, a median value, or the like of user experience quality reference indicators in a specific time period. The first threshold may be a preset indicator value used to measure network quality. When the statistical value corresponding to the user experience quality reference indicator is lower than the first threshold, it represents that network quality is poor. Otherwise, network quality is good. Further, the target network device may be manually specified, or may be automatically selected by using the statistical value corresponding to the user experience quality reference indicator.

Optionally, in a possible implementation, the network optimization analysis system 11 is further configured to: before obtaining the indicator value of the user experience quality reference indicator and the indicator value of the network performance indicator that are corresponding to the target network device at the different moment in the same time period, aggregate, based on a network topology, a user experience indicator according to a network device; further calculate, based on the aggregated user experience indicator, a statistical value corresponding to a user experience quality reference indicator of each network device; and finally determine, as the target network device, a network device whose statistical value (an average value) corresponding to the user experience quality reference indicator of each network device is lower than the first threshold.

Optionally, in a possible implementation, the network performance indicator includes at least one of a network bandwidth usage, a packet loss rate, or a delay.

The user experience quality reference indicator represents an overall user experience quality level. Specifically, the user experience quality reference indicator of the target network device may be used to represent an overall user experience quality level of all users served by the target network device. The user experience quality reference indicator includes at least one of a poor-QoE rate indicator or a user experience indicator. The poor-QoE rate indicator of the target network device refers to a percentage of a quantity of poor-QoE users in the all users served by the target network device, and the user experience indicator includes but is not limited to: a video mean opinion score (video mean opinion score, vMOS), a frame freezing duration, a frame freezing rate, a frame freezing frequency, an artifact duration percentage, a quantity of artifact times, an artifact area percentage, a quantity of video quality switching times, or a poor video quality percentage. When the user experience quality reference indicator of the target network device is the user experience indicator, specifically, a statistical value (for example, an average value) of indicator values of user experience indicators of all users served by the target network device may be used as an indicator value of a user experience indicator of the target network device. For example, an average value of vMOS values of all users served by the target network device is used as a vMOS value of the target network device.

It should be noted that, in specific implementation, the network optimization analysis system 11, the user experience indicator collection system 12, and the topology resource management collection system 13 in this embodiment of this application may be deployed on a same server, or may be deployed on different servers. This is not limited in this application.

For better understanding of the method for determining the network performance bottleneck value provided in this embodiment of this application, the following provides detailed description with reference to a specific embodiment. Details are as follows.

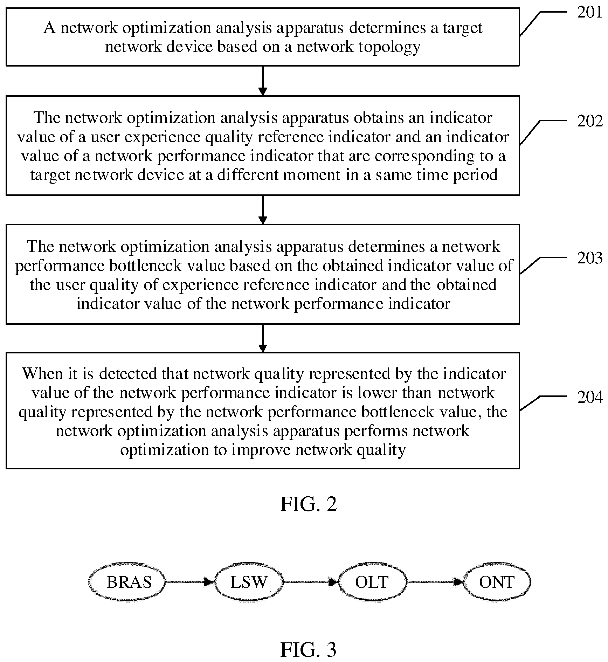

FIG. 2 is a schematic diagram of an embodiment of a method for determining a network performance bottleneck value according to an embodiment of this application.

As shown in FIG. 2, the method for determining the network performance bottleneck value in this embodiment of this application includes the following steps.

Optionally, 201: A network optimization analysis apparatus determines a target network device based on a network topology.

The target network device is a network device with relatively poor user experience quality. A manner of determining the target network device may be manually specified, or may be automatically selected based on a user experience quality reference indicator of a network device. A first threshold is a preset standard used to measure user experience quality of the network device. When an indicator value of the user experience quality reference indicator of the network device is lower than the first threshold, the network device is a target network device with relatively poor user experience quality.

Optionally, that the network optimization analysis apparatus determines a target network device based on a network topology may specifically include: The network optimization analysis apparatus aggregates, based on the network topology, a user experience indicator according to the network device; the network optimization analysis apparatus further calculates, based on the aggregated user experience indicator, a statistical value corresponding to a user experience quality reference indicator of each network device in a network; and the network optimization analysis apparatus finally determines, as the target network device, a network device whose statistical value corresponding to the user experience quality reference indicator of each network device is lower than the first threshold. The user experience quality reference indicator includes but is not limited to at least one of a poor-QoE rate indicator or a user experience indicator. The poor-QoE rate indicator is an indicator used to indicate an overall user experience quality level of all users connected to the network device. The user experience indicator may include but is not limited to a vMOS, a frame freezing duration, a frame freezing rate, a frame freezing frequency, an artifact duration percentage, a quantity of artifact times, an artifact area percentage, a quantity of video quality switching times, or a poor video quality percentage. A larger value of the vMOS represents better user experience quality. A larger value of the frame freezing duration, the frame freezing rate, the frame freezing frequency, the artifact duration percentage, the artifact times, the artifact area percentage, the quantity of video quality switching times, or the poor video quality percentage represents poorer user experience quality.

For ease of understanding the foregoing manner of determining the target network device, the following uses an example for description.

For example, FIG. 3 is a schematic diagram of one network topology according to an embodiment of this application. The network topology shown in FIG. 3 includes a BRAS, an LSW, an OLT, and an ONT. As shown by an arrow in FIG. 3, the ONT is a downstream device of the OLT, the OLT is a downstream device of the BRAS, and the LSW is configured to connect the BRAS and the OLT. Based on the network topology shown in FIG. 3, a user experience quality reference indicator corresponding to each network device in FIG. 3 is calculated. Calculation of a poor-QoE rate corresponding to the OLT is used as an example for description. The poor-QoE rate corresponding to the OLT is an overall user experience quality level of all users connected to the OLT. The overall user experience quality level of all users connected to the OLT may specifically be a percentage of a quantity of poor-QoE users connected to the OLT to a quantity of all users.

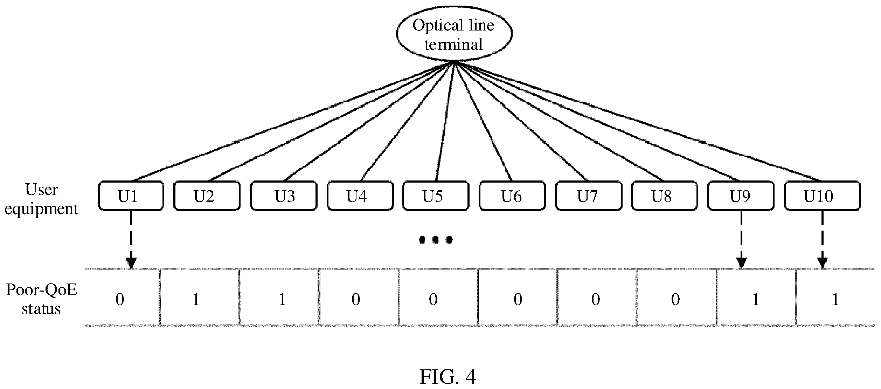

FIG. 4 is a schematic diagram of a connection structure of an optical line terminal OLT according to an embodiment of this application. As shown in FIG. 4, a total of 10 users (U1 to U10) are downstream users of the OLT, and there are four poor-QoE user equipment devices. A user equipment device whose poor-QoE status is set to 1 is considered as a poor-QoE user equipment device, and a user equipment device whose poor-QoE status is set to 0 is a non-poor-QoE user equipment device. Therefore, it is easy to learn that a poor-QoE rate corresponding to the OLT in FIG. 4 is 0.4. The first threshold may be preset according to experience. For example, the first threshold is set to 0.1 according to previous network performance analysis experience. In this case, the OLT shown in FIG. 4 is determined as the target network device.

The poor-QoE status of the user equipment device may be determined not only by using the poor-QoE rate indicator, but also by using at least one of the foregoing user experience indicators. For example, the poor-QoE status of the user equipment device is determined by using a vMOS. Specifically, if a maximum vMOS score is 5, and a minimum vMOS score is 0, when a vMOS score is lower than 2.5, the user equipment device is poor-QoE user equipment device. Otherwise, the user equipment device is a non-poor-QoE user equipment device. In addition, the poor-QoE status of the user equipment device may further be determined by using any one of the foregoing user experience indicators. Still using the vMOS as an example, in FIG. 4, an average vMOS score of all users connected to the OLT may be calculated. If the average vMOS score is lower than 2.5, it is determined that the OLT is poor-QoE device. Otherwise, it is determined that the OLT is a non-poor-QoE device.

It should be noted that functions of the network optimization analysis apparatus in this embodiment of this application may specifically implement functions of the foregoing network optimization analysis system 11, and may also implement functions of the network optimization analysis system 11, the user experience indicator collection system 12, and the topology resource management collection system 13.

202: The network optimization analysis apparatus obtains an indicator value of a user experience quality reference indicator and an indicator value of a network performance indicator that are corresponding to a target network device at a different moment in a same time period.

The indicator value of the user experience quality reference indicator and the indicator value of the network performance indicator that are corresponding to the target network device at the different moment in the same time period is specifically: an indicator value of a user experience quality reference indicator corresponding to a target network device at a different moment in a same time period and an indicator value of a network performance indicator corresponding to the target network device at the different moment in the same time period. In other words, the indicator value of the user experience quality reference indicator and the indicator value of the network performance indicator each may be a time series separately corresponding to the user experience quality reference indicator and the network performance indicator in a same time period. The user experience quality reference indicator is used to represent user experience quality. The user experience quality reference indicator may also be referred to as a key quality indicator (key quality indicator, KQI), and may specifically include the poor-QoE rate and the user experience indicator that are described in the foregoing step 201. The network performance indicator is used to represent network quality, and the network performance indicator may also be referred to as a key performance indicator (key performance indicator, KPI). Specifically, the KPI may include but is not limited to a network bandwidth usage, a packet loss rate, or a delay. A higher network bandwidth usage, a higher packet loss rate, or a longer delay represents poorer network quality. It should be noted that the KPI is still another network performance indicator that is obtained by converting the network bandwidth usage, the packet loss rate, or the delay and that is used to represent a same meaning, for example, a network transmission rate obtained by converting the delay.

203: The network optimization analysis apparatus determines a network performance bottleneck value based on the obtained indicator value of the user quality of experience reference indicator and the obtained indicator value of the network performance indicator.

The network performance bottleneck value may be determined according to the time series (for example, a KQI time series) corresponding to the user experience quality reference indicator and the time series (for example, a KPI time series) corresponding to the network performance indicator that are obtained in a same time period. The network performance bottleneck value is used to be compared with an indicator value of a network performance indicator of a network device, to determine network quality of the network device. It may also be understood that the network performance bottleneck value is used to determine whether the network performance indicator of the network device reaches a bottleneck.

Optionally, in a possible implementation in which the network optimization analysis apparatus determines a network performance bottleneck value based on the obtained indicator value of the user quality of experience reference indicator and the obtained indicator value of the network performance indicator may be: performing data analysis on the time series of the user experience quality reference indicator and the time series of the network performance indicator that are corresponding to the target network device and that are obtained in a same time period, to obtain an indicator value of a performance evaluation indicator, where the performance evaluation indicator is used to evaluate an association relationship between user experience quality and network quality; and determining the network performance bottleneck value based on the indicator value of the performance evaluation indicator.

Optionally, in the foregoing implementation, the performance evaluation indicator may specifically be a first evaluation indicator, where the first evaluation indicator is used to evaluate impact of network quality on user experience quality. In this case, the determining the network performance bottleneck value based on the indicator value of the performance evaluation indicator may specifically be: determining, as the network performance bottleneck value, an indicator value of a corresponding network performance indicator when an indicator value of the first evaluation indicator is greater than a second threshold, where the second threshold is preset.

Optionally, in addition to including the first evaluation indicator, the performance evaluation indicator in the foregoing implementation may further include a second evaluation indicator, where the second evaluation indicator is used to indicate a percentage of a quantity of moments at which user experience quality is consistent with network quality to a quantity of moments in the same time period. In other words, the second evaluation indicator is used to evaluate a percentage of a sum of a quantity of moments at which user experience quality is high and network quality is also high and a quantity of moments at which user experience quality is low and network quality is also low in the same time period to a total quantity of moments in the same time period. In this case, the determining the network performance bottleneck value based on the indicator value of the performance evaluation indicator may specifically be: using, as a candidate network performance bottleneck value, an indicator value of a corresponding network performance indicator when an indicator value of the first evaluation indicator is greater than a second threshold; and determining a final network performance bottleneck value from the candidate network performance bottleneck value by using a filtering condition that an indicator value of the second evaluation indicator is greater than a third threshold, where both the second threshold and the third threshold may be preset.

Specifically, the first evaluation indicator may specifically be an F-score indicator, and the F-score indicator is used to perform comprehensive evaluation on a precision rate Precision indicator and a recall rate Recall indicator. The precision indicator is used to indicate a percentage of a quantity of moments at which network quality is low and user experience quality is also low to a quantity of moments at which network quality is low, and the recall indicator is used to indicate a percentage of a quantity of moments at which network quality is low and user experience quality is also low to a quantity of moments at which user experience quality is low. The second evaluation indicator may specifically include but is not limited to an accuracy Accuracy indicator, and the accuracy indicator is used to indicate a percentage of a sum of a quantity of moments at which user experience quality is high and network quality is also high and a quantity of moments at which user experience quality is low and network quality is also low to a total quantity of moments in the same time period.

For ease of understanding the manner of obtaining the performance evaluation indicator in the foregoing step 203, the following describes in detail the determining manner by using an example in which the OLT is a target network device. Specifically, the following step 1 to step 3 are performed.

Step 1: Obtain an indicator value of a user experience quality reference indicator of the OLT at each moment in a same time period and an indicator value of a network performance indicator at each moment in the same time period.

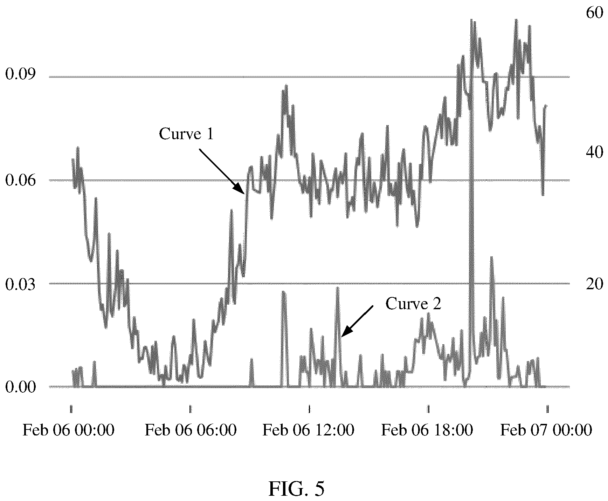

For example, an OLT in FIG. 4 is used as a target network device, a network bandwidth usage of the OLT is a network performance indicator, and a poor-QoE rate is a user experience quality reference indicator. The network optimization analysis apparatus collects the network bandwidth usage and the poor-QoE rate in the same time period in real time, to obtain an indicator value of the network bandwidth usage of the OLT and an indicator value of the poor-QoE rate of the OLT in the same time period. A time trend diagram shown in FIG. 5 may be used to represent the indicator value collected in real time. As shown in FIG. 5, an indicator value of a port bandwidth usage of the OLT collected in a time period from 00:00 to 24:00 on one day (for example, February 6) is shown by a curve 1 in FIG. 5. A value range [0, 60] of the curve 1 represents that a corresponding bandwidth usage is 0% to 60%. An indicator value of a poor-QoE rate of the OLT in a time period from 00:00 to 24:00 on the day (for example, February 6) is shown by a curve 2 in FIG. 5. A value range of the curve 2 is [0, 1]. A larger value indicates a higher poor-QoE rate and lower user experience quality.

Step 2: Obtain, based on a maximum indicator value and a minimum indicator value of the obtained network performance indicator, a value sequence corresponding to the network performance indicator at a certain interval.

For example, a maximum value and a minimum value of the network bandwidth usage shown in FIG. 5 are 60% and 0% respectively. A value 60 is used to represent the maximum value 60% of the network bandwidth usage, and a value 0 is used to represent the minimum value 0% of the network bandwidth usage. A value sequence, corresponding to the network bandwidth usage, obtained at an interval of 0.1 is represented as [0, 0.1, 0.2, 0.3,..., 60], where i is used to represent any value in the foregoing value sequence, and th_i represents a network bandwidth usage corresponding to the value i. For example, when i = 0.5, a corresponding th_i is 0.5%. The th_i may specifically be an indicator value of the network bandwidth usage of the OLT shown by the curve 1.

Step 3: Assume an indicator value of each network performance indicator in the foregoing value sequence as a network performance bottleneck value, and calculate an indicator value of a performance evaluation indicator corresponding to an indicator value of each network performance indicator in the foregoing value sequence based on the assumed network performance bottleneck value, the obtained indicator value of the user experience quality reference indicator, and the obtained indicator value of the network performance indicator.

For example, a poor-QoE threshold is set for the poor-QoE rate, which is recorded as KQI_th. For example, when KQI_th = 0.1, that is, the poor-QoE rate exceeds 0.1, it is considered that user experience quality is poor. For each value i in the foregoing value sequence, it is assumed that a possible network bandwidth usage bottleneck value of each value i is th_i. For each bottleneck value th_i, a quantity (TP) of moments at which a poor-QoE rate is greater than the poor-QoE threshold KQI_th and a network bandwidth usage is greater than the bottleneck value th_i at a same moment in all moments shown by the curve 1 and the curve 2; a quantity (FP) of moments at which a poor-QoE rate is not greater than the poor-QoE threshold KQI_th and a network bandwidth usage is greater than the bottleneck value th_i at a same moment in all moments shown by the curve 1 and the curve 2; a quantity of moments (FN) at which a poor-QoE rate is greater than the poor-QoE threshold KQI_th and a network bandwidth usage is not greater than the bottleneck value th_i at a same moment in all moments shown by the curve 1 and the curve 2; and a quantity (TN) of moments at which a poor-QoE rate is lower than or equal to the poor-QoE threshold KQI_th and a network bandwidth usage is lower than or equal to the bottleneck value th_i at a same moment in all moments shown by the curve 1 and the curve 2 are determined. Further, for each bottleneck value th_i, an indicator value of an F-score indicator corresponding to each bottleneck value th_i is obtained through calculation according to a formula 1, a formula 2, and a formula 3. The formula 1, formula 2, and formula 3 are respectively as follows:

$$\text{Formula 1: Precision} = TP/(TP + FP)$$

$$\text{Formula 2: Recall} = TP/(TP + FN)$$

Formula 3: F-score = $(1 + \beta)^2$ x ((Precision x Recall)/($\beta^2$ x Precision + Recall))

In the foregoing three formulas, TP is a quantity of moments at which a poor-QoE rate is greater than the poor-QoE threshold KQI_th and a network bandwidth usage is greater than the bottleneck value th_i at a same moment; FP is a quantity of moments at which a poor-QoE rate is not greater than the poor-QoE threshold KQI_th and a network bandwidth usage is greater than the bottleneck value th_i at a same moment; FN is a quantity of moments at which a poor-QoE rate is greater than the poor-QoE threshold KQI_th and a network bandwidth usage is not greater than the bottleneck value th_i at a same moment; and TN is a quantity of moments at which a poor-QoE rate is not greater than the poor-QoE threshold KQI_th and a network bandwidth usage is not greater than the bottleneck value th_i at a same moment, and $\beta$ is a weight parameter, where a value range of $\beta$ is [0, 1]. It can be learned from the foregoing formula 1 that Precision represents a percentage of a quantity of moments at which a network bandwidth usage is greater than the bottleneck value th_i corresponding to the network bandwidth usage to a quantity of moments at which a poor-QoE rate is greater than the poor-QoE threshold KQI_th. In other words, Precision is used to indicate a percentage of a part in which user experience is poor and network quality is also poor. It can be learned from the foregoing formula 2 that Recall represents a percentage of a quantity of moments at which a poor-QoE rate is greater than the poor-QoE threshold KQI_th corresponding to the poor-QoE rate to a quantity of moments at which a network bandwidth usage is greater than the bottleneck value th_i. In other words, Recall is used to indicate a percentage of a part in which user experience is poor and network quality is also poor.

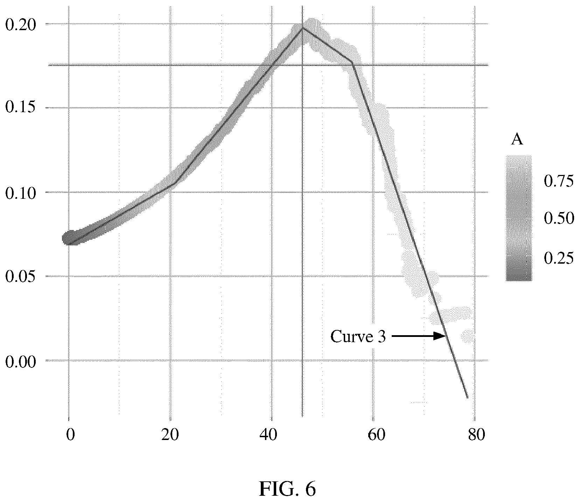

Further, the foregoing $\beta$ is preset to 0.5, and each value i in the foregoing value sequence [0, 0.1, 0.2, 0.3, ..., 60] is traversed according to the foregoing formula 1 to formula 3, where i belongs to [0, 0.1, 0.2, 0.3,..., 60]. An indicator value of an F-score indicator corresponding to each bottleneck value th_i is calculated. Finally, a correspondence between the F-score indicator and th_i is represented by using FIG. 6. In FIG. 6, a curve 3 represents an F-score indicator curve. In addition, a color change from bottom to top indicated by A on the right side in FIG. 6 indicates that the accuracy indicator increases from small to large. It should be noted that the accuracy indicator is calculated by using a subsequent formula 4, and details are described in the following. Details are not described herein again.

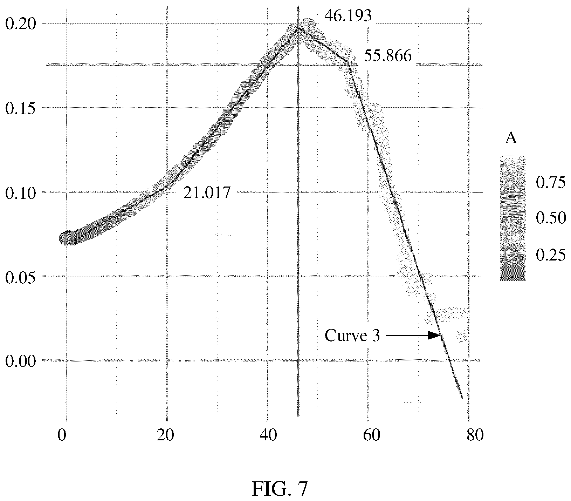

Based on the F-score indicator curve shown in FIG. 6, the determining, as the network performance bottleneck value, an indicator value of a corresponding network performance indicator when an indicator value of the first evaluation indicator is greater than a second threshold may specifically be: using, based on the F-score indicator curve obtained in FIG. 6, a regression algorithm to track and fit, to identify a corresponding network bandwidth usage at a turning point of the F-score curve. It is easy to understand that the F-score indicator changes greatly when the F-score indicator is close to the turning point of the network bandwidth usage. In other words, user experience quality is greatly affected by the network bandwidth usage at the turning point of the network bandwidth usage. Specifically, as shown in FIG. 7, network bandwidth usages corresponding to three identified turning points are 21.017%, 46.193%, and 55.866% respectively. The second threshold may be determined with reference to a percentage of a maximum F-score indicator value in the F-score indicator curve. It is assumed that the second threshold is set to 80% of the maximum F-score indicator value in the F-score indicator curve, in the three identified turning points in FIG. 6, only F-score indicator values corresponding to network bandwidth usages of 46.193% and 55.866% are greater than 80% of the maximum F-score indicator value in the F-score indicator curve. Therefore, the network optimization analysis apparatus may determine the network bandwidth usage of 55.866% or 46.193% as the network bandwidth usage bottleneck value. A specific manner of determining the foregoing network bandwidth usage bottleneck value may be obtained in a manual filtering manner or in an automatic filtering manner. This is not limited in this application.

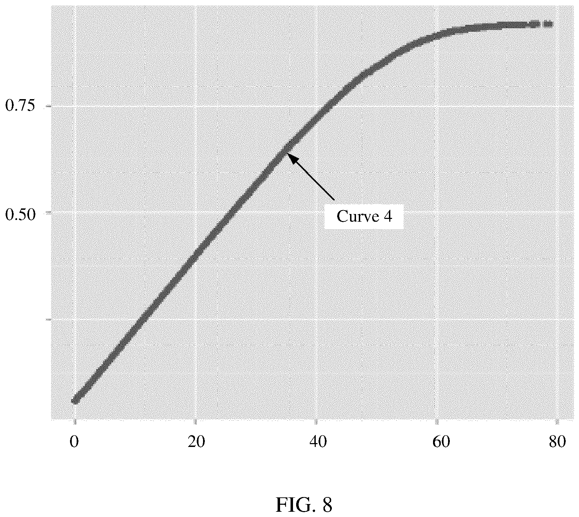

Further, in addition to using only the F-score indicator to determine the network performance bottleneck value, the network performance bottleneck value may further be determined by using the F-score indicator and the accuracy indicator may be used at the same time. Specifically, on a basis of calculating the F-score indicator curve in FIG. 6 and identifying that the turning points are 21.017%, 46.193%, and 55.866%, the network bandwidth usage bottleneck value may be selected with reference to the accuracy indicator as a second evaluation indicator. A specific implementation may be as follows: Based on the formula 4: Accuracy = (TP + TN)/(TP + TN + FP + FN), each value i in the foregoing value sequence [0, 0.1, 0.2, 0.3,..., 60] is traversed by using the formula 4, to calculate an indicator value of an accuracy indicator corresponding to each bottleneck value th_i. Finally, an accuracy indicator curve shown by a curve 4 in FIG. 8 is drawn based on each indicator value of the calculated accuracy indicator.

Based on the F-score indicator curve in FIG. 7 and the accuracy indicator curve in FIG. 8, the indicator value of the corresponding network performance indicator when the indicator value of the first evaluation indicator is greater than the second threshold is used as the candidate network performance bottleneck value, and the final network performance bottleneck value is determined, based on the indicator of the corresponding network performance indicator when the indicator value of the second evaluation indicator is greater than the third threshold from the candidate network performance bottleneck value. Specifically, it is assumed that the second threshold is still set to 75% of the maximum F-score indicator value in the F-score indicator curve, and similarly the third threshold is set to 80% of the maximum value in the accuracy indicator curve. Therefore, according to the F-score indicator curve shown in FIG. 7, network bandwidth usages of 46.193% and 55.866% are determined as candidate network bandwidth usage bottleneck values. Further, according to the Accuracy indicator curve shown in FIG. 8, a final network bandwidth usage bottleneck value selected from the determined 46.193% and 55.866% may be either of the candidate network bandwidth usage bottleneck values of 46.193% and 55.866%. Based on the foregoing filtering result, either of the network bandwidth usages of 46.193% and 55.866% may be used as the final network bandwidth usage bottleneck value. Optionally, a filtering condition may further be added. For example, to save costs, 55.866% is finally determined as the final network bandwidth usage bottleneck value.

It should be noted that the network bandwidth usage described in this embodiment of this application is a network bandwidth utilization, and the network bandwidth usage and the network bandwidth utilization are merely a difference in expression.

It should be further noted that, if the foregoing additional condition is used to filter the network bandwidth usage for the purpose of saving costs, in terms of a selection condition of the network performance bottleneck value, in addition to the performance evaluation indicator described in this application, another reasonable condition corresponding to the network performance indicator may also be used as the filtering condition, to obtain a more accurate network performance bottleneck value. This is not limited in this application.

In this embodiment of this application, a bottleneck value, namely, the network performance bottleneck value corresponding to the network performance indicator may be analyzed according to the time series corresponding to the user experience quality reference indicator and the time series corresponding to the network performance indicator in the same time period. It is easy to understand that poor network performance easily causes poor user experience quality, and therefore a relationship between user experience quality and network performance is considered in the network performance bottleneck value determined according to user experience. This can improve accuracy of the network performance bottleneck value.

Optionally, 204: When it is detected that network quality represented by the indicator value of the network performance indicator is lower than network quality represented by the network performance bottleneck value, the network optimization analysis apparatus performs network optimization to improve network quality.

After determining the network performance bottleneck value based on the indicator value of the user experience quality reference indicator and the indicator value of the network performance indicator that are corresponding to the target network device in the same time period, the network optimization analysis apparatus monitors the network performance indicator of the network device by using the network performance bottleneck value. When it is detected that network quality represented by the indicator value of the network performance indicator is lower than network quality represented by the network performance bottleneck value, the network optimization analysis apparatus performs network optimization to improve network quality.

Optionally, in a possible network optimization manner, when the network optimization analysis apparatus detects that network quality of a network device is lower than network quality corresponding to the network performance bottleneck value, the network optimization analysis apparatus performs independent network optimization on the network device, to improve network performance of the single network device.

Optionally, in another possible network optimization manner, when the network optimization analysis apparatus detects that a percentage of a quantity of network devices whose network quality is lower than network quality represented by the network performance bottleneck value to a total quantity of network devices in the network reaches a preset percentage, the network optimization analysis apparatus performs network-wide optimization, to improve network quality of the entire network.

That it is detected that network quality is lower than network quality represented by the network performance bottleneck value may include the following two cases. 1: The indicator value of the network performance indicator is lower than a corresponding network performance bottleneck value. When a higher indicator value of the network performance indicator indicates better network quality, in this case, if it is detected that the indicator value of the network performance indicator is lower than the network performance bottleneck value, it is detected that network quality is lower than network quality corresponding to the network performance indicator bottleneck value. For example, a higher network bandwidth usage indicates poorer network quality, a higher packet loss rate indicates poorer network quality, and a longer delay indicates poorer network quality; and 2: The value of the network performance indicator is higher than a corresponding network performance bottleneck value. When a higher network performance indicator indicates poorer network quality, in this case, if it is detected that the indicator value of the network performance indicator is higher than the network performance bottleneck value, it is detected that network quality is lower than network quality corresponding to the network performance indicator bottleneck value. For example, a higher network transmission rate indicates better network quality.

In this embodiment of this application, the network performance bottleneck value determined with reference to user experience is used to determine network quality. Because accuracy of the network performance bottleneck value obtained in this manner is relatively high, a network whose network quality deteriorates can be optimized in a timely manner, to improve network quality and improve user experience. Further, in this embodiment of this application, network optimization may further be performed on any device in the network, and network optimization does not need to be performed on the entire network. This can reduce network optimization costs.

It should be noted that a message name or a name of each parameter in the message in the following embodiments of this application is merely an example, and may be another name in specific implementation. For example, network quality may also be referred to as network performance, and the network bandwidth usage may be referred to as network bandwidth utilization. This is centrally described herein, and is not specifically limited in this embodiment of this application.

The foregoing mainly describes the solutions provided in the embodiments of this application from a perspective of the network optimization analysis apparatus. It may be understood that, to implement the foregoing functions, the foregoing network optimization analysis apparatus includes corresponding hardware structures and/or software modules for performing the functions. A person of ordinary skill in the art should easily be aware that, in combination with the examples described in the embodiments disclosed in this specification, modules, algorithms steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

From a perspective of a hardware structure, the network optimization analysis apparatus may be implemented by one entity device, or may be jointly implemented by a plurality of entity devices, or may be a logical function module in one entity device. This is not specifically limited in this embodiment of this application.

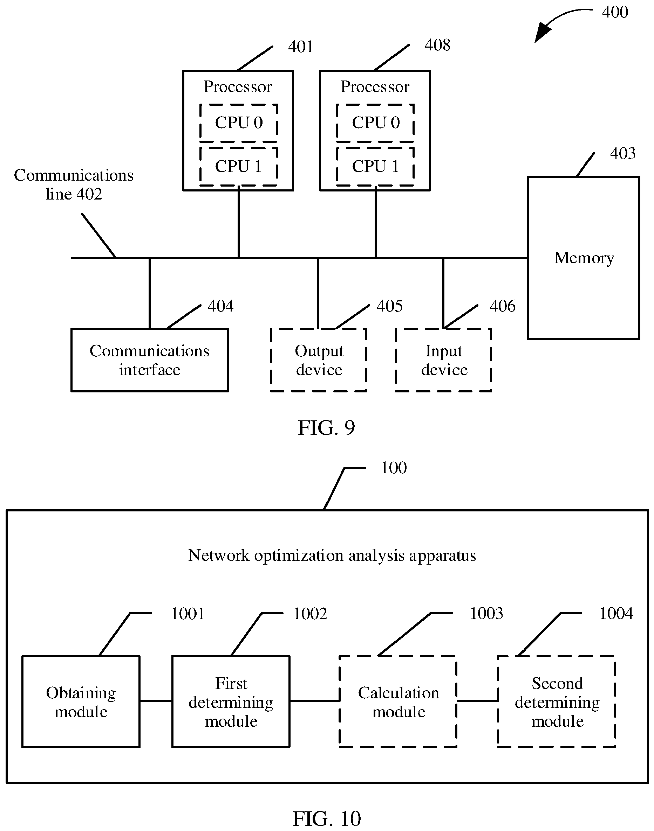

For example, the network optimization analysis apparatus may be implemented by using a network device shown in FIG. 9. FIG. 9 is a schematic diagram of a hardware structure of a network device according to an embodiment of this application.

As shown in FIG. 9, the network device 400 includes at least one processor 401, a communications line 402, a memory 403, and at least one communications interface 404.

The processor 401 may be a general-purpose central processing unit (Central Processing Unit, CPU), a microprocessor, an application-specific integrated circuit (Application-Specific Integrated Circuit, ASIC), or one or more integrated circuits configured to control program execution of the solution in this application.

The communications line 402 may include a path for transmitting information between the foregoing components.

The communications interface 404 uses any transceiver-type apparatus, to communicate with another device or a communications network such as the Ethernet, a radio access network (radio access network, RAN), or a wireless local area network (wireless local area networks, WLAN).

The memory 403 may be a read-only memory (read-only memory, ROM) or another type of static storage device that can store static information and instructions, or random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer. However, the memory 403 is not limited thereto. The memory may exist independently, and is connected to the processor by the communications line 402. Alternatively, the memory may be integrated with the processor.

The memory 403 is configured to store a computer-executable instruction for executing the solutions of this application, and the processor 401 controls the execution. The processor 401 is configured to execute the computer-executable instruction stored in the memory 403, to implement the method for determining the network performance bottleneck value provided in the following embodiments of this application.

Optionally, in this embodiment of this application, the computer-executable instruction may also be referred to as application program code. This is not specifically limited in this embodiment of this application. In a specific implementation, in an embodiment, the processor 401 may include one or more CPUs, for example, a CPU 0 and a CPU 1 in FIG. 9.

In specific implementation, in an embodiment, the network device 400 may include a plurality of processors, for example, the processor 401 and a processor 408 in FIG. 9. Each of the processors may be a single-core (single-CPU) processor or a multi-core (multi-CPU) processor. The processor herein may be one or more devices, circuits, and/or processing cores for processing data (for example, computer program instructions).

In specific implementation, in an embodiment, the network device 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, a projector (projector), or the like. The input device 406 communicates with the processor 401, and may receive an input of a user in a plurality of manners. For example, the input device 406 may be a mouse, a keyboard, a touchscreen device, or a sensing device.

The network device 400 may be a general-purpose device or a dedicated device. During specific implementation, the network device 400 may be a desktop computer, a portable computer, a network server, a personal digital assistant (personal digital assistant, PDA), a mobile phone, a tablet computer, a wireless terminal device, an embedded device, or a device with a structure similar to the structure in FIG. 9. A type of the network device 400 is not limited in this embodiment of this application.

In this embodiment of this application, function modules of the network optimization analysis apparatus may be obtained according to the foregoing method embodiment. For example, the functional modules may be obtained through division corresponding to functions, or two or more functions may be integrated into one processing module. The integrated module may be implemented in a form of hardware, or may be implemented in a form of a software functional module. It should be noted that, in this embodiment of this application, module division is exemplary, and is merely a logical function division. In actual implementation, another division manner may be used.

For example, when the function modules are obtained through division in an integrated manner, FIG. 10 is a schematic structural diagram of a network optimization analysis apparatus.

As shown in FIG. 10, the network optimization analysis apparatus 100 provided in an embodiment of this application includes an obtaining module 1001 and a first determining module 1002.

The obtaining module 1001 is configured to obtain an indicator value of a user experience quality reference indicator and an indicator value of a network performance indicator that are corresponding to a target network device at a different moment in a same time period, where a user experience quality indicator is used to represent user experience quality, and the network performance indicator is used to represent network quality. Network quality may also be referred to as network performance. The user experience quality reference indicator may be understood as user quality reference data, and specifically, the user experience quality reference indicator may be a time series. Similarly, the network performance indicator may also be understood as network performance data, and specifically, the network performance data may also be a time series.

The first determining module 1002 is configured to determine a network performance bottleneck value based on the obtained indicator value of the user experience quality reference indicator and the obtained indicator value of the network performance indicator in the same time period, where the network performance bottleneck value is used to be compared with an indicator value of a network performance indicator of a network device to determine network quality of the network device.

Optionally, in an implementation, the first determining module 1002 is specifically configured to analyze the indicator value of the user quality of experience reference indicator and the indicator value of the network performance indicator that are obtained by the target network device in the different moment in the same time period, to obtain an indicator value of a performance evaluation indicator, where the performance evaluation indicator is used to evaluate an association relationship between user experience quality and network quality; and determine the network performance bottleneck value based on the indicator value of the performance evaluation indicator obtained through analysis.

Optionally, in an implementation, the performance evaluation indicator may specifically be a first evaluation indicator, where the first evaluation indicator is used to evaluate impact of network quality on user experience quality. In this case, the first determining module 1002 is specifically configured to determine, as the network performance bottleneck value, an indicator value of a corresponding network performance indicator when an indicator value of the first evaluation indicator is greater than a second threshold, where the second threshold is preset.

Optionally, in an implementation, in addition to including the first evaluation indicator, the performance evaluation indicator may further include a second evaluation indicator, where the second performance evaluation indicator is used to evaluate a percentage of a quantity of moments at which user experience quality is consistent with network quality to a quantity of moments in the same time period. In this case, the first determining module 1002 is specifically configured to: use, as a candidate network performance bottleneck value, an indicator value of a corresponding network performance indicator when an indicator value of the first evaluation indicator is greater than a second threshold; and determine a final network performance bottleneck value from the candidate network performance bottleneck value by using a filtering condition that an indicator value of the second evaluation indicator is greater than a third threshold, where both the second threshold and the third threshold may be preset.

Optionally, in an implementation, the target network device may specifically be a network device whose user experience quality reference indicator is lower than a first threshold.

Optionally, in an implementation, the network optimization analysis apparatus 100 further includes a calculation module 1003 and a second determining module 1004. The calculation module 1003 is configured to aggregate, based on a network topology, a user experience indicator according to a network device, and further calculate, based on the aggregated user experience indicator, a statistical value corresponding to a user experience quality reference indicator of each network device. The second determining module 1004 is configured to determine, as the target network device, a network device whose statistical value corresponding to the user experience quality reference indicator of each network device is lower than the first threshold.

Optionally, in an implementation, the user experience quality reference indicator in this embodiment of this application includes at least one of a poor-QoE rate indicator or a user experience indicator; and the network performance indicator in this embodiment of this application includes at least one of a network bandwidth usage, a packet loss rate, or a delay. The poor-QoE rate indicator may specifically be used to indicate overall user experience quality of all users connected to the network device.

Optionally, in an implementation, the user experience indicator in this embodiment of this application includes: a video average opinion score, a frame freezing duration, a frame freezing rate, a frame freezing frequency, an artifact duration percentage, a quantity of artifact times, an artifact area percentage, a quantity of video quality switching times, or a poor video quality percentage.

All related content of the steps in the foregoing method embodiments may be cited in function descriptions of corresponding function modules. Details are not described herein again.

In this embodiment, the network optimization analysis apparatus 100 is presented in a form of function modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions. In a simple embodiment, a person skilled in the art may figure out that the network optimization analysis apparatus 100 may be in the form shown in FIG. 9.

For example, the processor 401 in FIG. 9 may invoke the computer-executable instruction stored in the memory 403, so that the network optimization analysis apparatus 100 performs the method for determining the network performance bottleneck indicator in a handover process in the foregoing method embodiment.

Specifically, functions/implementation processes of the processing module 1001, the first determining module 1002, and the calculation module 1003 in FIG. 10 may be implemented by the processor 401 in FIG. 9 by invoking the computer-executable instruction stored in the memory 403.

The network optimization analysis apparatus provided in this embodiment of this application may be configured to perform the foregoing policy control method. Therefore, for a technical effect that can be achieved by the network optimization analysis apparatus, refer to the foregoing method embodiments. Details are not described herein again.

In the foregoing embodiment, the network optimization analysis apparatus 100 is presented in a form of function modules obtained through division in an integrated manner. Certainly, each functional module of the network optimization analysis apparatus may be obtained through division based on each function in this embodiment of this application. This is not specifically limited in this embodiment of this application.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc, or the like.

The method for determining the network performance bottleneck value and the network optimization analysis apparatus provided in the embodiments of this application are described in detail above. The principle and implementation of this application are described herein through specific examples. The description about the embodiments of this application is merely provided to help understand the method and core ideas of this application. In addition, a person of ordinary skill in the art can make variations and modifications to this application in terms of the specific implementations and application scopes according to the ideas of this application. Therefore, the content of specification shall not be construed as a limit to this application.

**Claims**

1. A method for determining a network performance bottleneck value, comprising:

   obtaining an indicator value of a user experience quality reference indicator and an indicator value of a network performance indicator that are corresponding to a target network device at a different moment in a same time period, wherein the user experience quality reference indicator is used to represent user experience quality, and the network performance indicator is used to represent network quality; and
   determining a network performance bottleneck value based on the obtained indicator value of the user experience quality reference indicator and the obtained indicator value of the network performance indicator, wherein the network performance bottleneck value is used to be compared with an indicator value of a network performance indicator of a network device to determine network quality of the network device.

2. The method according to claim 1, wherein the determining a network performance bottleneck value based on the obtained indicator value of the user quality of experience reference indicator and the obtained indicator value of the network performance indicator comprises:

   analyzing the obtained indicator value of the user quality of experience reference indicator and the obtained indicator value of the network performance indicator, to obtain an indicator value of a performance evaluation indicator, wherein the performance evaluation indicator is used to evaluate an association relationship between user experience quality and network quality; and
   determining the network performance bottleneck value based on the indicator value of the performance evaluation indicator.

3. The method according to claim 2, wherein the performance evaluation indicator comprises a first evaluation indicator, and the first evaluation indicator is used to evaluate impact of network quality on user experience quality; and
   the determining the network performance bottleneck value based on the indicator value of the performance evaluation indicator comprises:

   determining, as the network performance bottleneck value, an indicator value of a corresponding network performance indicator when an indicator value of the first evaluation indicator is greater than a second threshold.

4. The method according to claim 3, wherein the performance evaluation indicator further comprises a second evaluation indicator, and the second performance evaluation indicator is used to indicate a percentage of a quantity of moments at which user experience quality is consistent with network quality to a quantity of moments in the same time period; and
   the determining the network performance bottleneck value based on the indicator value of the performance evaluation indicator comprises:

   determining, as the network performance bottleneck value, an indicator value of a corresponding network performance indicator when the indicator value of the first evaluation indicator is greater than the second threshold and an indicator value of the second evaluation indicator is greater than a third threshold.

5. The method according to any one of claims 1 to 4, wherein the target network device is a network device whose user experience quality represented by a statistical value corresponding to a user experience quality reference indicator is lower than user experience quality represented by a first threshold.

6. The method according to claim 5, wherein before the obtaining an indicator value of a user experience quality reference indicator and an indicator value of a network performance indicator that are corresponding to a target network device at a different moment in a same time period, the method further comprises:

   aggregating, based on a network topology, a user experience indicator according to a network device;
   calculating, based on the aggregated user experience indicator, a statistical value corresponding to a user experience quality reference indicator of each network device; and
   determining, as the target network device, a network device whose user experience quality represented by the statistical value corresponding to the user experience quality reference indicator of each network device is lower than user experience quality represented by the first threshold.

7. The method according to any one of claims 1 to 5, wherein the user experience quality reference indicator comprises at least one of a poor-QoE rate indicator or a user experience indicator; and the network performance indicator comprises at least one of a network bandwidth usage, a packet loss rate, or a delay.

8. The method according to claim 7, wherein the user experience indicator comprises: a video average opinion score, a frame freezing duration, a frame freezing rate, a frame freezing frequency, an artifact duration percentage, a quantity of artifact times, an artifact area percentage, a quantity of video quality switching times, or a poor video quality percentage.

9. A network optimization analysis apparatus, comprising:

   an obtaining unit, configured to obtain an indicator value of a user experience quality reference indicator and an indicator value of a network performance indicator that are corresponding to a target network device at a different moment in a same time period, wherein the user experience quality reference indicator is used to represent user experience quality, and the network performance indicator is used to represent network quality; and
   a first determining module, configured to determine a network performance bottleneck value based on the obtained indicator value of the user experience quality reference indicator and the obtained indicator value of the network performance indicator, wherein the network performance bottleneck value is used to be compared with an indicator value of a network performance indicator of a network device to determine network quality of the network device.

10. The network optimization analysis apparatus according to claim 9, wherein the first determining module is specifically configured to:

    analyze the obtained indicator value of the user quality of experience reference indicator and the obtained indicator value of the network performance indicator, to obtain an indicator value of a performance evaluation indicator, wherein the performance evaluation indicator is used to evaluate an association relationship between user experience quality and network quality; and
    determine the network performance bottleneck value based on the indicator value of the performance evaluation indicator.

11. The network optimization analysis apparatus according to claim 10, wherein the performance evaluation indicator comprises a first evaluation indicator, and the first evaluation indicator is used to evaluate impact of network quality on user experience quality; and
    the first determining module is specifically configured to determine, as the network performance bottleneck value, an indicator value of a corresponding network performance indicator when an indicator value of the first evaluation indicator is greater than a second threshold.

12. The network optimization analysis apparatus according to claim 11, wherein the performance evaluation indicator further comprises a second evaluation indicator, and the second performance evaluation indicator is used to indicate a percentage of a quantity of moments at which user experience quality is consistent with network quality to a quantity of moments in the same time period; and
    the first determining module is specifically configured to determine, as the network performance bottleneck value, an indicator value of a corresponding network performance indicator when the indicator value of the first evaluation indicator is greater than the second threshold and an indicator value of the second evaluation indicator is greater than a third threshold.

13. The network optimization analysis apparatus according to any one of claims 9 to 12, wherein the target network device is a network device whose user experience quality represented by a statistical value corresponding to a user experience quality reference indicator is lower than user experience quality represented by a first threshold.

14. The network optimization analysis apparatus according to claim 13, wherein the network optimization analysis apparatus further comprises:

    a calculation module, configured to aggregate, based on a network topology, a user experience indicator according to a network device, and calculate, based on the aggregated user experience indicator, a statistical value corresponding to a user experience quality reference indicator of each network device; and

a second determining module, configured to determine, as the target network device, a network device whose user experience quality represented by the statistical value corresponding to the user experience quality reference indicator of each network device is lower than user experience quality represented by the first threshold.

15. The network optimization analysis apparatus according to any one of claims 9 to 13, wherein the user experience quality reference indicator comprises at least one of a poor-QoE rate indicator or a user experience indicator; and the network performance indicator comprises at least one of a network bandwidth usage, a packet loss rate, or a delay.

16. The network optimization analysis apparatus according to claim 15, wherein the user experience indicator comprises: a video average opinion score, a frame freezing duration, a frame freezing rate, a frame freezing frequency, an artifact duration percentage, a quantity of artifact times, an artifact area percentage, a quantity of video quality switching times, or a poor video quality percentage.

17. A network optimization analysis apparatus, comprising:

a processing unit and a storage unit, wherein the storage unit is configured to store a computer operation instruction; and
the processing unit is configured to invoke the computer operation instruction to perform the method for determining the network bottleneck value according to any one of claims 1 to 8.

18. A computer-readable storage medium, wherein the computer-readable storage medium comprises a computer operation instruction, and when the computer operation instruction runs, the computer is enabled to perform the method for determining the network bottleneck value according to any one of claims 1 to 8.

FIG. 1

A network optimization analysis apparatus determines a target network device based on a network topology ⟋— 201

The network optimization analysis apparatus obtains an indicator value of a user experience quality reference indicator and an indicator value of a network performance indicator that are corresponding to a target network device at a different moment in a same time period ⟋— 202

The network optimization analysis apparatus determines a network performance bottleneck value based on the obtained indicator value of the user quality of experience reference indicator and the obtained indicator value of the network performance indicator ⟋— 203

When it is detected that network quality represented by the indicator value of the network performance indicator is lower than network quality represented by the network performance bottleneck value, the network optimization analysis apparatus performs network optimization to improve network quality ⟋— 204

FIG. 2

BRAS → LSW → OLT → ONT

FIG. 3

EP 3 866 483 A1

FIG. 4

FIG. 5

FIG. 6

FIG. 7

FIG. 8

400

401          408

| Processor | Processor |
|-----------|-----------|
| CPU 0 | CPU 0 |
| CPU 1 | CPU 1 |

403

Communications
line 402

Memory

404        405        406

| Communications interface | Output device | Input device |

FIG. 9

100

Network optimization analysis apparatus

1001        1002            1003            1004

| Obtaining module | First determining module | Calculation module | Second determining module |

FIG. 10

## INTERNATIONAL SEARCH REPORT

| | |
|---|---|
| International application No. |
| **PCT/CN2019/117975** |

**A.    CLASSIFICATION OF SUBJECT MATTER**

H04N 21/647(2011.01)i

According to International Patent Classification (IPC) or to both national classification and IPC

**B.    FIELDS SEARCHED**

Minimum documentation searched (classification system followed by classification symbols)

H04N H04L

Documentation searched other than minimum documentation to the extent that such documents are included in the fields searched

Electronic data base consulted during the international search (name of data base and, where practicable, search terms used)

CNPAT, WPI, EPODOC, CNKI: 性能, 质量, 体验, 满意, 评价, 评估, 用户, 客户, 门限, 阈值, 瓶颈值, performance, quality, experience, estimat+, evaluate, judgement, satisfact+, contentment, user, client, threshold, bottleneck, bottle-neck

**C.    DOCUMENTS CONSIDERED TO BE RELEVANT**

| Category* | Citation of document, with indication, where appropriate, of the relevant passages | Relevant to claim No. |
|---|---|---|
| X | CN 103840978 A (HUAWEI TECHNOLOGIES CO., LTD.) 04 June 2014 (2014-06-04) description, paragraphs [0075]-[0114] | 1-18 |
| A | CN 102572924 A (THETA NETWORKS (BEIJING) CO., LTD.) 11 July 2012 (2012-07-11) entire document | 1-18 |
| A | CN 102625344 A (CHONGQING INFORMATION TECHNOLOGY DESIGNING CO., LTD.) 01 August 2012 (2012-08-01) entire document | 1-18 |
| A | CN 107026750 A (CHINA MOBILE GROUP GUANGDONG COMPANY LIMITED) 08 August 2017 (2017-08-08) entire document | 1-18 |
| A | US 2007030815 A1 (KONINKLIJKE KPN N.V.) 08 February 2007 (2007-02-08) entire document | 1-18 |

☐ Further documents are listed in the continuation of Box C.    ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **10 January 2020** | **23 January 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2019/117975**

| Patent document cited in search report | | | Publication date (day/month/year) | Patent family member(s) | | | Publication date (day/month/year) |
|---|---|---|---|---|---|---|---|
| CN | 103840978 | A | 04 June 2014 | None | | | |
| CN | 102572924 | A | 11 July 2012 | None | | | |
| CN | 102625344 | A | 01 August 2012 | None | | | |
| CN | 107026750 | A | 08 August 2017 | None | | | |
| US | 2007030815 | A1 | 08 February 2007 | WO | 2004114701 | A2 | 29 December 2004 |
| | | | | EP | 1489865 | A1 | 22 December 2004 |
| | | | | JP | 2006527937 | A | 07 December 2006 |

Form PCT/ISA/210 (patent family annex) (January 2015)